# EUROPÄISCHE PATENTSCHRIFT

(11) **EP 1 152 212 B1**
(45) Veröffentlichungstag und Bekanntmachung des Hinweises auf die Patenterteilung: **14.01.2004**
(21) Anmeldenummer: 01106530.7
(22) Anmeldetag: 15.03.2001
(51) Int. Cl.: G01B 21/04, B25J 9/16

(54) **Weitgehend selbsttätige Kalibrierung eines Betätigungsarmes eines Roboters**
Semi automatic calibration of the actuating arm of a robot
Calibration semi automatique du bras d'un robot

(30) Priorität: 29.03.2000 AT 5382000
(43) Veröffentlichungstag der Anmeldung: 07.11.2001
(73) Patentinhaber: TMS Produktionssysteme GmbH, 4031 Linz (AT)
(72) Erfinder: Spieth, Uli, 4481 Asten (AT)
(74) Vertreter: VA TECH Patente GmbH & Co

(56) Entgegenhaltungen:
- EP-A- 0 114 505
- EP-A- 0 353 585
- EP-A- 0 470 257
- DE-A- 3 731 704
- FR-A- 2 696 969
- GB-A- 2 327 512
- US-A- 4 868 473
- US-A- 5 731 679

## Beschreibung

Die vorliegende Erfindung betrifft eine Vorrichtung und ein Verfahren zur Kalibrierung eines Betätigungsarmes eines Roboters, der mittels eines mathematischen Modells für eine zu vermessende Vorrichtung Off Line programmierbar ist, insbesondere für die automatische Fertigung in der Automobilindustrie.

Aus dem Stand der Technik sind unterschiedliche Arten der Kalibrierung von Betätigungsarmen von Robotern und ähnlichen bekannt:

Viele Methoden zielen darauf ab, das kinematische Modell des Roboters selbst an reale Gegebenheiten anzupassen, wie es z.B. aus der GB 2 327 512 A, der US 5,731,679 A, der EP 353 585 A1, der FR 2 696 969 A und der US 4,868,473 A entnommen werden kann. Das kinematische Modell des Roboters spielt bei der Offline Programmierung des Roboters selbst jedoch keine Rolle, sondern ist als vorgegeben zu betrachten und ist vielmehr die Grundlage für die Bewegung und Steuerung des Roboters.

Gleichfalls sind Methoden zur Kalibrierung von an Roboterarmen befestigten Sensoren, bekannte, wie z.B. aus der DE 37 31 704 A1. Dazu muss der Roboter allerdings bereits kalibriert sein, d.h. er muss in der Lage sein bestimmte Positionen exakt anzufahren, da ansonsten eine zuverlässige Referenz zur Kalibrierung des Sensors fehlt.

Wiederum andere Methoden gleichen Positionsabweichungen erst im Betrieb aus, wie z.B. aus der EP 114 505 A1 bekannt. Der Roboter muss dabei vorab überhaupt nicht kalibriert werden, da der Abgleich zwischen Soll- und Istposition erst im Betrieb erfolgt.

In der Vergangenheit wurde die Steuerung von Robotern und deren Kalibrierung häufig On Line durch sogenanntes Teaching, das heisst, durch manuelles Verfahren des Roboterarmes an die gewünschte Position mit Hilfe einer Femsteuerung und Aufzeichnen dieser Bewegung durch die Steuerung durchgeführt.

Zur Zeit ist es aufgrund der Fortschritte im Bereich der EDV-Simmulation von Anlagen bereits möglich, eine Off Line Programmierung, eines Roboters durchzuführen. Bei der Off Line Programmierung werden die Roboter Steuerprogramme in einem separaten Simulationsrechner anhand eines geometrisch exakten Simulationsmodells der Anlage generiert. Da die reale Anlage mit der virtuellen Anlage aufgrund von Fertigungs- oder Montagetoleranzen nicht exakt übereinstimmt, muss vor Inbetriebnahme eine Kalibrierung des Roboters durchgeführt werden. Dies erreicht man in der Praxis durch manuelles Anfahren (Teachen über das Handpanel) von ca. 5 bis 10 beliebigen Raumpunkten mit dem Roboter-TCP (Tool Center Point). Die Roboter-Steuerung zeigt oder speichert hierbei die jeweiligen IST-Koordinaten der Raumpunkte. Parallel werden - ebenfalls manuell - mit Hilfe einer Messeinrichtung, die auf das Werkstück-Koordinatensystem (i. a. das Koordinatensystem der im Messraum vermessenen Vorrichtung) einjustiert ist, die SOLL-Koordinaten dieser Raumpunkte in Bezug zum Werkstück (Vorrichtung) gemessen. Die so ermittelten Koordinatenwertepaare SOLL/IST jedes Raumpunktes werden über einen Datenträger oder durch Eintippen in das Simulationssystem eingegeben. Dieser Kalibriervorgang erfordert i.a. zwei Mitarbeiter und einen nicht unerheblichen Zeitaufwand. Außerdem ist jede manuelle Handhabung von Daten eine potentielle Fehlerquelle. Bei einer größeren Anzahl von Robotern, z.B. einige hundert in einer Automobilfertigung, stellen dieser Personalaufwand und die damit verbunden Fehlerquellen einen erheblichen Nachteil dar.

Aus der EP 470 257 A1 ist eine solche Kalibrierung eines Roboters mittels einer offline Programmierung bekannt, bei der eine Messvorrichtung bezüglich des Koordinatensystem des Roboters vermessen wird, wodurch eine selbsttätige und automatische Kalibrierung unmöglich ist, da der unkalibrierte Roboter in seinem Koordinatensystem nur manuell exakt verfahren werden kann. Eine rasche und kostengünstige Kalibrierung ist damit jedoch nicht möglich.

Es ist daher eine Aufgabe der vorliegenden Erfindung, eine Vorrichtung und ein automatisiertes Verfahren zu schaffen, mit dem die Kalibrierung möglichst rasch und folglich kostengünstig, sowie möglichst sicher und mit hoher Zuverlässigkeit und Genauigkeit durchgeführt werden kann.

Erfindungsgemäß wird diese Aufgabe dadurch gelöst, daß eine Messvorrichtung in Bezug auf das Koordinatensystem der realen Vorrichtung vermessen wird, der Betätigungsarm des Roboters in seinem Koordinatensystem selbsttätig an einen vorbestimmten Referenzpunkt verfahren und diese Position anhand der Messvorrichtung selbsttätig vermessen wird, wobei die Abweichung zwischen den Koordinaten dieses Referenzpunktes in dem Koordinatensystem der realen Vorrichtung und dem Koordinatensystem des Roboters rechnergesteuert ermittelt und zur Kalibrierung des Roboters das mathematische Modell der Vorrichtung in Abhängigkeit von dieser Abweichung an die reale Vorrichtung angepasst wird. Bei einer erfindungsgemäßen Vorrichtung wird diese Aufgabe dadurch gelöst, daß eine in Bezug auf das Koordinatensystem der realen Vorrichtung vermessbare Messvorrichtung vorgesehen ist, mittels welcher die Position des Betätigungsarmes des Roboters an einem vorbestimmbaren, im Koordinatensystem des Roboters angefahrenen Referenzpunktes automatisch messbar ist, wobei ein Mittel zur rechnergesteuerten Bestimmung der Abweichung zwischen der Position dieses Referenzpunktes in dem Koordinatensystem der realen Vorrichtung und dem Koordinatensystem des Roboters und ein Mittel zur rechnergesteuerten Kalibrierung des Roboters durch Anpassen des mathematischen Modells der Vorrichtung an die reale Vorrichtung vorgesehen sind.

Durch die neuartige, funktionell und datentechnisch integrierte Verfahrensführung bzw. Vorrichtung ermöglicht die Erfindung nun erstmals eine selbsttätige bzw. rechnergesteuerte, das heisst, automatische und fehlerfreie Kalibrierung eines Off Line programmierten Roboters, die rasch und mit großer Genauigkeit durchgeführt werden kann. Im Gegensatz zu bisher bekannten Methoden kann die erfindungsgernäße Kalibrierung mit nur einem Mitarbeiter durchgeführt werden. Dieser Vorteil kommt insbesondere für die im Karosseriebau typischen Roboter-Zellen mit mehreren Robotern und einer oder mehreren Teilevorrichtungen zum Tragen. Mit einem Messsystemaufbau lassen sich mehrere Roboter in Folge automatisiert kalibrieren. Dies spart erheblichen Personal- und Zeitaufwand und führt zwangsläufig zu größerer Datensicherheit und direkter Dokumentierbarkeit. Ein weiterer Vorteil besteht darin, daß nach dem ersten Kalibrierdurchgang zum Nachweis der Wirksamkeit dieser Kalibrierung sehr schnell ein zweiter Kalibrierlauf mit dem korrigierten Off Line-Kalibrierprogramm durchfahren werden kann.

Vorzugsweise wird das mathematische Modell durch eine mathematische Transformation an die reale Vorrichtung angepasst. Dadurch ist eine präzise Anpassung des Simulationsmodells an das reale Werkstück mittels einfacher mathematischer Operationen möglich. Zur Erhöhung der Genauigkeit ist es von Vorteil, wenn der Betätigungsarm des Roboters an zumindest drei, vorzugsweise 5-10 Referenzpunkte verfahren wird und diese automatisch vermessen werden, wobei die Anpassung des mathematischen Modells aufgrund der Abweichungen von zumindest drei, vorzugsweise 5-10 Referenzpunkten durchgeführt wird. Durch diese Anzahl von Referenzpunkte können alle Abweichungen, lineare Verschiebungen in drei Richtungen, Drehungen bzw. Verkippungen und Maßstabsabweichungen, sowie Nachgiebigkeiten des Roboters aufgrund von Werkzeugmassen der Simulation bezüglich der realen Vorrichtung zweifelsfrei festgestellt und korrigiert werden. Weiters ist es in der Praxis von Vorteil, wenn der relevante Werkzeugpunkt des Roboters an die Referenzpunkte verfahren und diese Werkzeugpunkte vermessen werden. Dadurch werden jene Positionen der Simulation, die für den späteren Betrieb relevant sind, exakt an die reale Vorrichtung angepasst. Eine besonders hohe Genauigkeit ergibt sich dadurch, daß die Referenzpunkte mittels einer optischen Messvorrichtung, insbesondere ein 3D-Lasermesssystem vermessen werden. Darüber hinaus hat die optische Messung den Vorteil einer leichten Zugänglichkeit und einer hohen Reichweite.

Eine einfache Steuerung der automatischen Kalibrierung ergibt sich insbesondere dadurch, daß der Roboter und das Messvorrichtung durch ein offline Kalibrierprogramm zentral gesteuert werden und das Ergebnis der Messung, gegebenenfalls nach einer Vorverarbeitung, einem das mathematische Modell enthaltende Simulationsprogramm zur Verarbeitung übermittelt wird. Dabei werden durch das offline Kalibrierprogramm über ein Netzwerkprotokoll, z.B. Ethernet mit TCP/IP, Daten mit der Steuerung des Roboters und der Messvorrichtung, sowie gegebenenfalls mit dem das Simulationsprogramm enthaltenden Rechner ausgetauscht. Eine besonders hohe Zeiterspamis ist dadurch möglich, daß mit einem Messaufbau eine Mehrzahl von Robotem kalibriert werden.

Weitere Merkmale und Vorteile der vorliegenden Erfindung ergeben sich aus der nachfolgenden Beschreibung eines nicht einschränkenden Ausführungsbeispiels der Erfindung, wobei auf die beiliegenden Figuren Bezug genommen wird, die folgendes zeigen:
Fig. 1 eine schematische Darstellung einer erfindungsgemäßen Kalibriervorrichtung und
Fig. 2 eine schematische Darstellung der Funktionen des Kalibrierprogrammes.

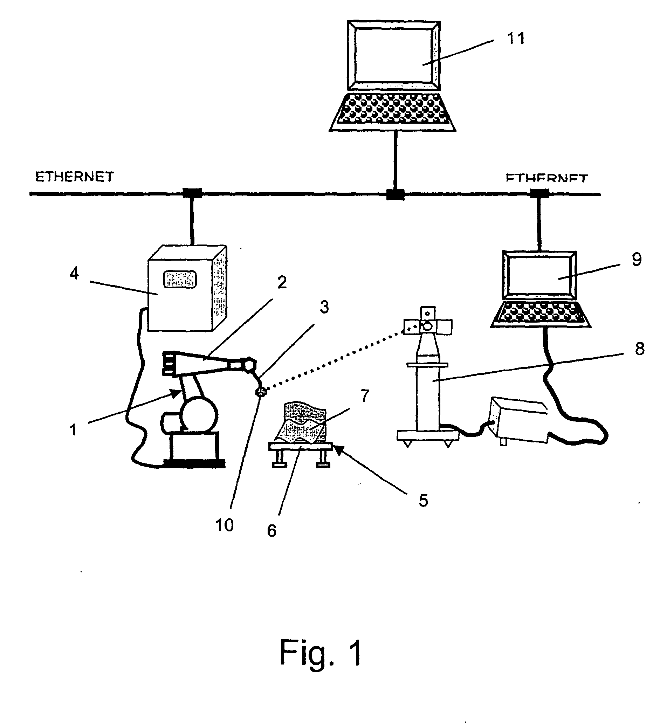

Im Folgenden wird auf die Figur 1 Bezug genommen, in welcher ein schematischer Aufbau zur Kalibrierung eines Off Line programmierbaren Roboters 1 dargestellt ist. Der einen Roboterarm 2 samt Werkzeughalter 3 aufweisende Roboter 1 ist über Steuerleitungen mit einer Steuerungseinrichtung 4 verbunden, welche über eine Schnittstelle an einem Netzwerk, z. B. Ethernet, angeschlossen ist. Roboter und zugehörige Steuerungseinrichtungen sind dem Fachmann bekannt und werden an dieser Stelle nicht näher erläutert.

In der Arbeitsstation des Roboters befindet sich jene Vorrichtung 5, bezüglich welche der Roboter zu kalibrieren ist. Bei dem gezeigten Ausführungsbeispiel besteht die Vorrichtung 5 aus einem Teileträger 6 und zwei Werkstücken 7.

Zur Messung der Position des Werkzeughalters 3 des Roboters ist bei dem dargestellten Ausführungsbeispiel eine optische Positionsmesseinrichtung, nämlich ein 3 D Laser Messsystem 8 vorgesehen, welches ebenso über Steuerleitungen an einen sogenannten Messrechner 9 angeschlossen ist, der wiederum mit dem Netzwerk verbunden ist. Zur Messung der Position des Werkzeughalters 3 des Roboters sind an dem Werkzeughalter 3 Reflektoren 10 angeordnet. Im Rahmen der vorliegenden Erfindung kann jede bekannte, zur Positionsmessung geeignete Vorrichtung verwendet werden. Optische Vorrichtungen haben den Vorteil einer guten Zugänglichkeit und einer großen Reichweite, sowie großen Genauigkeit. Vorrichtungen dieser Art sind dem Fachmann bekannt und beispielsweise unter der Bezeichnung "Leica Laser Tracker" im einschlägigen Handel erhältlich.

Weiters ist an das Ethernet-Netzwerk ein Simulationsrechner 11 angeschlossen, in welchem die Vorrichtung samt Roboter anhand eines mathematischen Modells simuliert ist. Ebenso ist in dem Simulationsrechner ein Modul zur Off Line Programmerstellung für die Robotersteuerung 4 enthalten. Weiters ist in dem Simulationsrechner ein Modul zur Verarbeitung von Kalibrierdaten vorgesehen, welches die bei der Kalibrierung von dem Messrechner 9 und der Roboter-Steuerung 4 oder dem Kalibrierprogramm gelieferten Daten verarbeitet und mittels einer mathematischen Transformation die Simulation an die tatsächliche Anlage anpasst. Ein Modul zur Kalibrierdatenverarbeitung ist ebenso bekannt und wird beispielsweise von der Fa. Krypton unter der Bezeichnung "Robcal" und "Roboscope" im einschlägigen Handel angeboten. Programme zur Simulation einer technischen Anlage, bzw. zur Off Line Programmerstellung für eine Roboter-Steuerung sind ebenso bekannt und beispielsweise von der Fa. Tecnomatrix unter der Bezeichnung "Robcad" im Handel erhältlich.

Das Programm zur Durchführung der automatischen Kalibrierung kann entweder in dem Messrechner, der Roboter-Steuerung oder dem Simulationsrechner, sowie verteilt auf zwei oder mehr dieser Rechner, aber auch an einem separaten, in Fig. 1 nicht dargestellten zusätzlichen Rechner installiert sein.

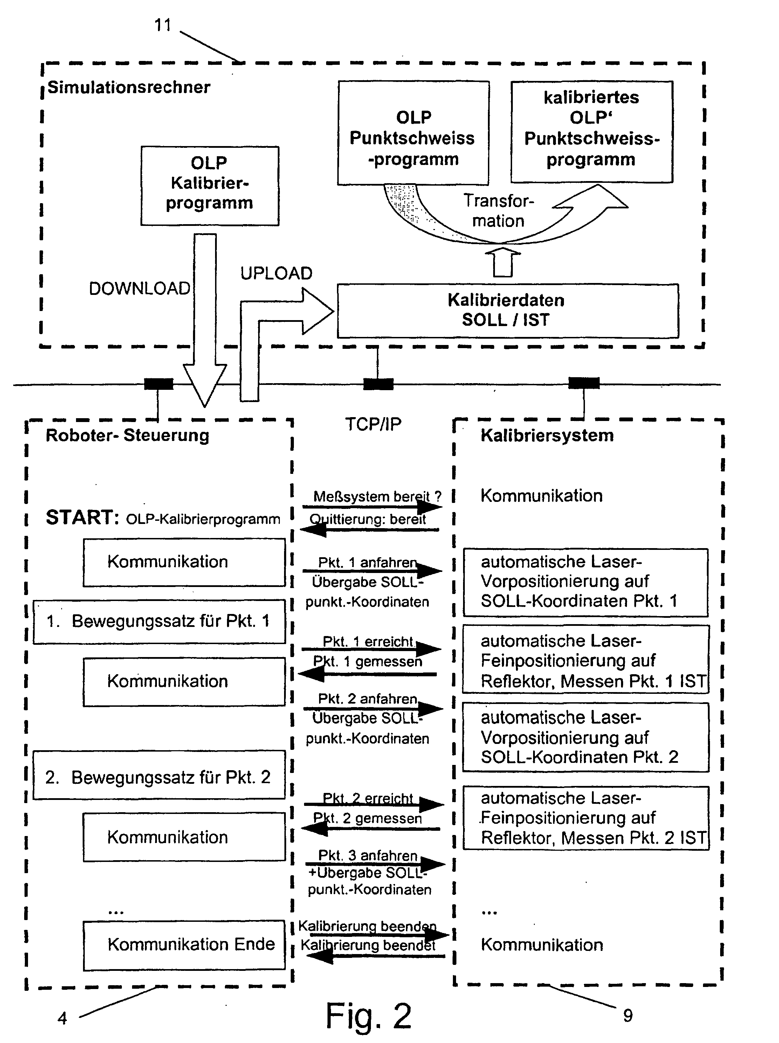

Die einzelnen Funktionen des Kalibrierprogrammes werden nachfolgend mit Bezug auf Fig. 2 im Detail beschrieben.

Im Simulationsrechner 11 werden durch Simulation von Abläufen in einem vorliegenden Modell die Off Line-Roboterprogramme für den Produktionseinsatz (z. B. Punktschweißprogramme) generiert. Diese Programme sind zunächst noch nicht kalibriert, d. h. sie sind noch nicht durch Koordinatentransformation an die vorhandenen geometrischen Abweichungen der realen Anlage zum Modell angepaßt und somit noch nicht freigegeben.

Gemäß Fig. 2 wird nun auf demselben Simulationsrechner 11 auch ein Off Line-Kalibrierprogramm "OLP Kalibrierprogramm" zum Anfahren von ca. 5 bis 10 Raumpunkten mit dem Roboter-TCP (Tool Center Point) erstellt. Über einen DOWNLOAD Befehl, vorzugsweise von der Roboter-Steuerung initiiert, wird bei dem gezeigten Ausführungsbeispiel das OLP Kalibrierprogramm in die Robotersteuerung 4 transferiert.

Die Programmstruktur des OLP Kalibrierprogramms ist durch einen satzweisen Aufbau gekennzeichnet und enthält Sätze mit Kommunikationsfunktionen und Sätze für die Bewegungsfunktionen des Roboters zum Anfahren der programmierten Raumpunkte.

Für die Kommunikationsfunktionen stehen in bekannter Weise Unterprogramme oder Makros zur Verfügung, durch deren Aufruf die in der Steuerung zu implementierenden Systembefehle zum Senden (SEND) und Empfangen (RECEIVE) von Daten über eine installierte Schnittstelle, z. B. Ethernet-Schnittstelle, mittels eines geeigneten Protokolls, z.B. TCP/IP genutzt werden können.

Die zu sendenden Daten sind in ihrer Syntax-Schreibweise definierte Zeichenfolgen (Mnemonics) für Kommandos/Befehle, Quittierungen der Befehlsausführungen und ergänzende Begleitparameter, die für alle Kommunikationsteilnehmer verständlich, interpretierbar und ausführbar sein müssen.

Die Daten werden von den Systembefehlen SEND und RECEIVE im Rahmen eines Netzwerkprotokolls, z. B. TCP/IP, zwischen den im Netz über Netzwerkadressen konfigurierten Kommunikationspartnern ausgetauscht.

Die empfangenen Daten werden vom jeweiligen Adressaten interpretiert, die Befehle werden ausgeführt und die Befehlsausführung an den entsprechenden Absender nach dem sog. Hand Shake-Prinzip zurückquittiert.

Auf diese Weise wird, wie in Fig. 2 schematisch dargestellt, eine Kommunikation und Synchronisation zwischen Robotersteuerung 4 und dem Messrechner 9 realisiert.

Der Start des Kalibrierablaufs erfolgt aus sicherheitstechnischen Gründen vorzugsweise durch manuellen Programmstart an der Robotersteuerung 4.

Der durch das gestartete OLP Kalibrierprogramm zu steuernde Ablauf beginnt mit der Abfrage der Betriebsbereitschaft des Messsystems.

Nach positiver Quittierung durch den Messrechner 9 gibt die Robotersteuerung 4 das Kommando zum Anfahren des ersten Raumpunktes an das Messsystem. Das Kommando enthält als Begleitparameter die SOLL-Koordinaten dieses Raumpunktes.

Jetzt fahren beide Systeme, Roboter und 3D-Laser Meßsystem, unabhängig voneinander den durch die SOLL-Koordinaten beschriebenen Punkt an. Das Meßsystem fährt aufgrund des Befehls der Robotersteuerung und der Roboter fährt aufgrund seines nachfolgenden Bewegungssatzes.

Nach der Ausführung des Bewegungssatzes meldet die Robotersteuerung 4 an den Messrechner 9, daß der Roboter-TCP in dem Raumpunkt positioniert ist. Der Messrechner 9 interpretiert diese Meldung als Befehl zum Messen, führt die Feinjustierung des Lasers auf den Reflektor im Roboter-TCP und die anschließende Koordinatenmessung durch und quittiert die ausgeführte Messung mit Übergabe der gemessenen IST-Koordinaten an die Robotersteuerung 4. Diese speichert die Koordinatenwertepaare SOLL / IST in einer Kalibrierdatentabelle (Datenfile) ab und gibt den nächsten Fahrbefehl mit Übergabe der Punkt-Koordinaten an den Messrechner aus.

Es wiederholt sich derselbe Ablaufzyklus für den zweiten Punkt. Diese Ablauffolgen wiederholen sich entsprechend der Anzahl anzufahrender Raumpunkte, die im Kalibrierprogramm vorprogrammiert sind.

Den Abschluß des Kalibrierzykluses meldet die Robotersteuerung 4 an den Messrechner mit dem Befehl "Kalibrieren beenden", die der Messrechner mit dem Befehl "Kalibrieren beendet" quittiert und sich hierbei ggf. noch in eine Vorzugslage zurückbewegt.

Nach Empfang dieser Quittierung "Kalibrieren beendet" sendet die Roboter-Steuerung über einen Befehl UPLOAD die Kalibrierdatentabelle als Datenfile mit den Koordinatenwertepaaren aller vermessener Raumpunkte an den Simulationsrechner 11 zurück.

Im Simulationsrechner 11 fließt die nachfolgende Auswertung der Kalibrierdaten SOLUIST über einen mathematischen Algorithmus in Form einer Koordinatentransformation in das OLP-Roboterprogramm, z. B. das Produktionsprogramm zum Punktschweißen, ein.

In Folge kann das nun kalibrierte OLP-Roboterprogramm, z.B. dieses Punktschweißprogramm, für die Produktion freigegeben, über den Befehl DOWNLOAD in die Robotersteuerung 4 geladen und mit dem Roboter in der Anlage abgefahren werden.

Alternativ läßt sich der Ablauf auch realisieren, wenn das OLP-Kalibrierprogramm sowohl in die Robotersteuerung als auch in den Messrechner geladen wird, wobei der Messrechner einen Software-Interpreter erhält, der ihm erlaubt, das Kalibrierprogramm interpretativ zu verarbeiten und die Punktkoordinaten zu selektieren.

Die Kommunikation und Synchronisation bleibt konzeptionell gleich. Es wird vorteilhafter, wenn in diesem Fall der Messrechner am Ende des Kalibrierzykluses die Kalibrierdatentabelle als Datenfile an den Simulationsrechner zurücksendet.

Eine dritte mögliche Variante besteht darin, das Kalibrierprogramm direkt im Simulationsrechner interpretativ abzuarbeiten, wobei der Simulationsrechner über das Netzwerk Punkt für Punkt Fahrbefehle an die Robotersteuerung und Fahr- und Meßbefehle an den Messrechner erteilt. Nach jeder Messung sendet der Messrechner mit der Ausführungsquittierung das Koordinatenwertepaar des vermessenen Raumpunktes an den Simulationsrechner zurück.

In Bezug auf den daten- und softwaretechnischen Aufwand sind alle drei geschilderten Varianten in der Ausführung als nahezu gleichwertig einzustufen.

Die Vorzüge der Erfindung bestehen darin, daß einerseits - die aktuell verfügbare Bustechnik (Ethernet) und die in den drei Geräten (Simulationsrechner - Messrechner - Roboter-Steuerung) verfügbaren Busschnittstellen für einen durchgängigen Datentransfer zum Zweck der Roboter-Kalibrierung genutzt werden und andererseits - durch Kalibrierung des Roboters über ein im Simulationsrechner erstelltes Off Line-Programm zum automatisierten Anfahren von Raumpunkten, zum automatisierten Vermessen dieser Punkt und zur anschließenden automatisierten Koordinatentransformation im Simulationsmodell. Hierzu sind gegenüber herkömmlichen Ausführungen Erweiterungen in den genannten drei Geräten erforderlich. Dies sind im wesentlichen:

### im Simulationsrechner:

Übertragen des Off Line-Kalibrierprogramms in die Roboter-Steuerung und gleichzeitig in den Messrechner, Erfassung der vom Messrechner rückgemeldeten SOLL-Koordinaten und anschließende Verrechnung der SOLL/IST-Koordinaten im Simulationsmodell.

### in der Roboter-Steuerung:

Abfahren des Off Line-Kalibrierprogramms mit Synchronisierung des Messsystems durch Kommunizieren von Steueranweisungen über die Busschnittstelle nach dem Hand Shake-Prinzip. Der Roboter besitzt zum Messrechner die Masterfunktion und der Start des automatischen Kalibrierablaufs erfolgt vom Roboter-Panel.

### in dem Messrechner:

Interpretative Verarbeiten des Off Line-Kalibrierprogramms und Anfahren der Raumpunkte synchron zum Roboter. Automatische Feinjustage des Laserstrahls auf den Reflektor im Roboter-TCP. Kommunizierung von Steueranweisungen mit dem Roboter über die Busschnittstelle nach dem Hand Shake-Prinzip, zum automatischen Starten des Messvorgangs und zur Rückübertragung der Messdaten (SOLL-Koordinaten) an den Simulationsrechner.

## Patentansprüche

1. Verfahren zur Kalibrierung eines Betätigungsarmes (2) eines Roboters (1), der mittels eines mathematischen Modells für eine Vorrichtung (5) offline programmiert ist, insbesondere für die automatische Fertigung in der Automobilindustrie, bei wetchem eine Messvorrichtung (8) in Bezug auf das Koordinatensystem der realen Vorrichtung (5) vermessen wird, der Betätigungsarm (2) des Roboters in seinem Koordinatensystem selbsttätig an einen vorbestimmten Referenzpunkt verfahren und diese Position anhand der Messvorrichtung (8) selbsttätig vermessen wird, wobei die Abweichung zwischen den Koordinaten dieses Referenzpunktes in dem Koordinatensystem der realen Vorrichtung (5) und dem Koordinatensystem des Roboters (1) rechnergesteuert ermittelt und zur Kalibrierung des Roboters (1) das mathematische Modell der Vorrichtung (5) in Abhängigkeit von dieser Abweichung an die reale Vorrichtung (5) angepasst wird.

2. Verfahren nach Anspruch 1, **dadurch gekennzeichnet, daß** das mathematische Modell durch eine mathematische Transformation an die reale Vorrichtung angepasst wird.

3. Verfahren nach Anspruch 1 oder 2, **dadurch gekennzeichnet, daß** der Betätigungsarm (2) des Roboters (1) an zumindest drei, vorzugsweise 5-10 Referenzpunkte, verfahren wird und diese selbsttätig vermessen werden, wobei die Anpassung des mathematischen Modells aufgrund der Abweichungen von zumindest drei, vorzugsweise 5-10, Referenzpunkten durchgeführt wird.

4. Verfahren nach Anspruch 1, 2 oder 3, **dadurch gekennzeichnet, daß** der relevante Werkzeugpunkt des Roboters (1) an den zumindest einem Referenzpunkt verfahren und dieser Werkzeugpunkt vermessen wird.

5. Verfahren nach einem der Ansprüche 1 bis 4, **dadurch gekennzeichnet, daß** der mindestens eine Referenzpunkt mittels einer optischen Messvorrichtung (8), insbesondere ein 3D-Lasermesssystem, vermessen werden.

6. Verfahren nach einem der Ansprüche 1 bis 5, **dadurch gekennzeichnet, daß** der Roboter (1) und die Messvorrichtung (8) durch ein offline Kalibrierprogramm gesteuert werden und das Ergebnis der Messung, gegebenenfalls nach einer Vorverarbeitung, einem das mathematische Modell enthaltende Simulationsprogramm zur Verarbeitung übermittelt wird.

7. Verfahren nach Anspruch 6, **dadurch gekennzeichnet, daß** durch das offline Kalibrierprogramm über ein Netzwerkprotokoll, z.B. Ethemet, Daten mit der Steuerung des Roboters (1) und der Messvorrichtung (8), sowie gegebenenfalls mit dem das Simulationsprogramm enthaltenden Rechner ausgetauscht werden.

8. Verfahren nach einem der Ansprüche 1 bis 6, **dadurch gekennzeichnet, daß** gleichzeitig eine Mehrzahl von Robotern (1) kalibriert werden.

9. Verfahren nach einem der Ansprüche 1 bis 8, **dadurch gekennzeichnet, daß** durch die Off-Line Kalibrierung weitere vorbestimmte Messungen in einer Roboterzelle oder in einer Roboter-Anwendung, z.B. zum Zweck einer in der Produktion integrierten "in process" Messung von definierten Meßpunkten, Prüf- oder Referenzpunkten oder auch Flächen- und Flächenvergleichsmessungen von Karosserieteilen oder Karosseriebaugruppen, durchgeführt werden.

10. Vorrichtung zur Kalibrierung eines Betätigungsarmes (2) eines Roboters, der mittels eines mathematischen Modells einer Vorrichtung offline programmierbar ist, insbesondere für die automatische Fertigung in der Automobilindustrie, bei welchem eine in Bezug auf das Koordinatensystem der realen Vorrichtung vermessbare Messvorrichtung (8) vorgesehen ist, mittels welcher die Position des Betätigungsarmes (2) des Roboters (1) an einem vorbestimmbaren, im Koordinatensystem des Roboters (1) angefahrenen Referenzpunkt selbsttätig messbar ist, wobei ein Mittel zur rechnergesteuerten Bestimmung der Abweichung zwischen der Position dieses Referenzpunktes in dem Koordinatensystem der realen Vorrichtung und dem Koordinatensystem des Roboters (1) und ein Mittel zur Kalibrierung des Roboters (1) durch Anpassen des mathematischen Modells an die reale Vorrichtung vorgesehen sind.

11. Vorrichtung nach Anspruch 10, **dadurch gekennzeichnet, daß** an dem Werkzeugpunkt des Betätigungsarmes (2) des Roboters (1) ein Aufnehmer für die automatische Messvorrichtung (8) vorgesehen ist.

12. Vorrichtung nach Anspruch 10 oder 11, **dadurch gekennzeichnet, daß** die Messvorrichtung (8) eine optische Messvorrichtung, insbesondere ein 3D-Lasermesssystem, ist.

13. Vorrichtung nach Anspruch 10, 11 oder 12, **dadurch gekennzeichnet, daß** die Steuerung des Roboters (1), der Messvorrichtung (8) und eine das Mittel zur Bestimmung der Abweichung umfassende Kalibriervorrichtung, sowie gegebenenfalls eine das mathematische Modell enthaltende Simulationseinrichtung über ein Netzwerk miteinander verbunden sind.

## Claims

1. Method for the calibration of an actuating arm (2) of a robot (1) which is programmed offline by means of a mathematical model for an apparatus (5), in particular for automated manufacture in the automotive industry, in which a measuring apparatus (8) is measured with respect to the coordinate system of the real apparatus (5), the actuating arm (2) of the robot is moved in its coordinate system automatically to a predetermined reference point and this position is automatically measured using the measuring apparatus (8), the deviation between the coordinates of this reference point in the coordinate system of the real apparatus (5) and the coordinate system of the robot (1) being determined under computer control and the mathematical model of the apparatus (5) being adapted as a function of this deviation to the real apparatus (5) for the calibration of the robot (1).

2. Method according to Claim 1, **characterized in that** the mathematical model is adapted to the real apparatus by a mathematical transformation.

3. Method according to Claim 1 or 2, **characterized in that** the actuating arm (2) of the robot (1) is moved to at least three, preferably 5 - 10, reference points and these are automatically measured, the adaptation of the mathematical model being carried out on the basis of the deviations for at least three, preferably 5-10, reference points.

4. Method according to Claim 1, 2 or 3, **characterized in that** the relevant tool point of the robot (1) is moved to the at least one reference point and this tool point is measured.

5. Method according to any of Claims 1 to 4, **characterized in that** the at least one reference point is measured by means of an optical measuring apparatus (8), in particular a 3D laser measuring system.

6. Method according to any of Claims 1 to 5, **characterized in that** the robot (1) and the measuring apparatus (8) are controlled by an offline calibration program and the result of the measurement, optionally after preliminary processing, is transferred for processing to a simulation program containing the mathematical model.

7. Method according to Claim 6, **characterized in that** data are exchanged with the control of the robot (1) and the measuring apparatus (8), and optionally with the computer containing the simulation program, by the offline calibration program via a network. protocol, e.g. Ethernet.

8. Method according to any of Claims 1 to 6, **characterized in that** a multiplicity of robots (1) are calibrated simultaneously.

9. Method according to any of Claims 1 to 8, **characterized in that** further predetermined measurements in a robot cell or in a robot application, for example for an in process measurement of defined measuring points, test points or reference points or area or comparative area measurements of bodywork parts or bodywork modules, are carried out by the offline calibration, said measurement being integrated in production.

10. Apparatus for the calibration of an actuating arm (2) of a robot which is programmable offline by means of a mathematical model of an apparatus, in particular for automated manufacture in the automotive industry, in which a measuring apparatus (8) can be measured with respect to the coordinate system of the real apparatus is provided, by means of which apparatus the position of the actuating arm (2) of the robot (1) can be automatically measured at a predetermined reference point moved to in the coordinate system of the robot (1), a means for the computer-controlled determination of the deviation between the position of this reference point in the coordinate system of the real apparatus and the coordinate system of the robot (1) and a means for the calibration of the robot (1) by adaptation of the mathematical model to the real apparatus being provided.

11. Apparatus according to Claim 10, **characterized in that** a transducer for the automatic measuring apparatus (8) is provided at the tool point of the actuating arm (2) of the robot (1).

12. Apparatus according to Claim 10 or 11, **characterized in that** the measuring apparatus (8) is an optical measuring apparatus, in particular a 3D laser measuring system.

13. Apparatus according to Claim 10, 11 or 12, **characterized in that** the control of the robot (1), the control of the measuring apparatus (8) and a calibration apparatus comprising the means for determining the deviation, and optionally a simulation means containing the mathematical model, are connected to one another via a network.

## Revendications

1. Procédé d'étalonnage d'un bras d'actionnement (2) d'un robot (1), programmé offline à l'aide d'un modèle mathématique pour un dispositif (5), en particulier pour la fabrication automatique dans l'industrie automobile, procédé pour lequel un dispositif mesureur (8) est mesuré par rapport au système de coordonnées du dispositif réel (5), le bras d'actionnement (2) du robot est déplacé dans son système de coordonnées, automatiquement à un point de référence prédéterminé, et cette position est mesurée automatiquement à l'aide du dispositif mesureur (8), l'écart entre les coordonnées de ce point de référence dans le système de coordonnées du dispositif réel (5) et le système de coordonnées du robot (7) étant déterminé sous la commande d'un ordinateur et, pour étalonner le robot (1), le modèle mathématique du dispositif (5) est adapté au dispositif réel (5) en fonction de cet écart.

2. Procédé selon la revendication 1, **caractérisé en ce que** le modèle mathématique est adapté au dispositif réel par transformation mathématique.

3. Procédé selon la revendication 1 ou 2, **caractérisé en ce que** le bras d'actionnement (2) du robot (1) est déplacé en au moins trois points de référence, de préférence de 5 à 10 points de référence, et ceux-ci sont mesurés automatiquement, l'adaptation du modèle mathématique étant effectuée en se basant sur les écarts par rapport à au moins trois, de préférence 5 à 10 points de référence.

4. Procédé selon la revendication 1, 2 ou 3, **caractérisé en ce que** le point d'outil important du robot (1) est déplacé au au moins un point de référence, et ce point d'outil est mesuré.

5. Procédé selon l'une des revendications 1 à 4, **caractérisé en ce que** le au moins un point de référence est mesuré à l'aide d'un dispositif mesureur (8) optique, en particulier un système mesureur à laser 3D.

6. Procédé selon l'une des revendications 1 à 5, **caractérisé en ce que** le robot (1) et le dispositif de mesure (8) sont commandés par un programme d'étalonnage offline, et le résultat de la mesure est transmis, le cas échéant après un pré-traitement, pour traitement, à un programme de simulation contenant le modèle mathématique.

7. Procédé selon la revendication 6, **caractérisé en ce qu'**au moyen du programme d'étalonnage offline, par l'intermédiaire d'un protocole de réseau, par exemple Éthernet, on procède à l'échange de données avec la commande du robot (1) et le dispositif mesureur (8), ainsi que, le cas échéant, avec l'ordinateur contenant le programme de simulation.

8. Procédé selon l'une des revendications 1 à 6, **caractérisé en ce que** l'on procède simultanément à l'étalonnage d'une pluralité de robots (1).

9. Procédé selon l'une des revendications 1 à 8, **caractérisé en ce que**, au moyen de l'étalonnage offline, on procède à d'autres mesures prédéterminées, dans une cellule de robot ou dans une application de robot, par exemple dans le but d'une mesure intégrée "in process" dans la production, concernant des points de mesure définis, des points de contrôle ou de référence, ou également des mesures de surfaces et de surfaces comparatives sur des pièces de carrosserie ou des composants de carrosserie.

10. Dispositif d'étalonnage du bras d'actionnement (2) de robot, programmable offline à l'aide d'un modèle mathématique d'un dispositif, en particulier pour la fabrication automatique dans l'industrie automobile, pour lequel on prévoit un dispositif mesureur (8) repérable en référence au système de coordonnées du dispositif réel, dispositif mesureur à l'aide duquel la position du bras d'actionnement (2) du robot (1) est mesurable automatiquement en un point de référence prédéterminable, adopté dans le système de coordonnées du robot (1), sachant qu'un moyen, permettant, sous la commande d'un ordinateur, de déterminer l'écart entre la position de ce point de référence dans le système de coordonnées du dispositif réel et le système de coordonnées du robot (1 ), et un moyen d'étalonnage du robot (1) sont prévus par une adaptation du modèle mathématique au dispositif réel.

11. Dispositif selon la revendication 10, **caractérisé en ce qu'**un capteur est prévu pour le dispositif de mesure automatique (8), au point d'outil du bras d'actionnement (2).

12. Dispositif selon la revendication 10 ou 11, **caractérisé en ce que** le dispositif mesureur (8) est un dispositif mesureur optique, en particulier, un système mesureur à laser 3D.

13. Dispositif selon la revendication 10, 11 ou 12, **caractérisé en ce que** la commande du robot (1), du dispositif mesureur (8) et un dispositif d'étalonnage comprenant le moyen permettant de déterminer l'écart, ainsi que, le cas échéant, un dispositif de simulation contenant le modèle mathématique, sont reliés ensemble par un réseau.
